# FASCICULE DE BREVET EUROPEEN

(11) **EP 2 282 899 B1**
(45) Date de publication et mention de la délivrance du brevet: **29.03.2017**
(21) Numéro de dépôt: 09772646.7
(22) Date de dépôt: 04.06.2009
(51) Int. Cl.: B60F 3/00

(54) **VEHICULE AMPHIBIE**
AMPHIBIENFAHRZEUG
AMPHIBIOUS VEHICLE

(30) Priorité: 10.06.2008 FR 0803209
(43) Date de publication de la demande: 16.02.2011
(73) Titulaire: Iguana Yachts, 50290 Brehal (FR)
(72) Inventeur: FRITSCH, Antoine, F-78570 Andresy (FR)
(74) Mandataire: Mazabraud, Xavier
(86) Numéro de dépôt international: PCT/FR2009/000658
(87) Numéro de publication internationale: WO 2010/000963

(56) Documents cités:
- DE-A1- 10 344 957
- FR-A- 2 782 696
- GB-A- 2 419 326

## Description

La présente invention concerne un véhicule amphibie.

Les véhicules amphibies offrent la possibilité de se déplacer sur l'eau et sur terre avec le même véhicule, ce qui présenter une grande utilité dans les zones non dotées de facilités portuaires. Si le véhicule amphibie est doté de chenilles, il peut en outre se déplacer dans des zones terrestres non dotées de routes, telles que des zones côtières.

Le déplacement sur l'eau de façon relativement efficace exige que ces véhicules soient dotés d'une coque de formes hydrodynamiquement acceptables et, bien sûr, de moyens de propulsion aquatiques tels qu'une hélice, un hydrojet ou une voile. L'intégration dans cette coque en outre de moyens de propulsion terrestres, tels que des roues ou des chenilles, est délicate. Pour ne pas pénaliser les performances du véhicule en propulsion aquatique, il convient notamment d'éviter que ces moyens soient immergés lors des phases de propulsion aquatique et provoquent une traînée trop importante, par exemple en étant rétractables.

On connaît plusieurs exemples de véhicules amphibies dont les moyens de propulsion terrestres sont rétractables. Par exemple, WO 2007/141515 décrit un véhicule amphibie doté de chenilles et/ou de roues montées coulissantes selon un axe vertical ou pivotantes selon un axe longitudinal. Cependant, en position haute, ces moyens de propulsion restent très proches de la surface de flottaison et sont entièrement soumis aux éléments marins (vagues, houle...) et risquent donc de pénaliser les phases de propulsion aquatique. De plus, cette solution conduit à un véhicule de grande largeur, particulièrement dans le cas de roues ou de chenilles pivotantes selon un axe longitudinal.

US 2005/0003715 décrit un véhicule amphibie doté de chenilles montées pivotantes sur les côtés du véhicule qui peuvent prendre deux positions, une position déployée où elles peuvent prendre appui sur le sol et permettre au véhicule de progresser sur terre, et une position repliée pendant les phases de propulsion aquatique où elles reposent sur des espaces réservés à cet effet sur le pont du véhicule. Dans cette solution les chenilles en position repliée ne sont pas susceptibles de provoquer de la traînée, mais soit elles occupent une part importante de la surface de pont, soit elles sont tenues écartées de la surface de pont et conduisent à un élargissement important du véhicule.

DE 10 2004 059 861 décrit un véhicule amphibie doté de roues montées à la base de caissons rétractables. Les caissons sont rétractés et intégrés dans la coque pour la propulsion terrestre, et déployés pour la propulsion aquatique, transformant le véhicule en catamaran. Cependant les roues sont fixes par rapport aux caissons et sont donc immergées en phase de propulsion aquatique, provoquant une traînée. Minimiser cette traînée conduit à adopter de petites roues, ce qui rend la propulsion terrestre peu performante.

FR2782696 et GB2419326 décrivent des véhicules amphibies et sont considérés comme représentant l'art antérieur le plus proche.

L'invention a pour objet de résoudre ces problèmes, notamment de fournir un véhicule amphibie dans lequel les moyens de propulsion terrestres ne font pas perdre au véhicule ses qualités nautiques et/ou son habitabilité.

A cet effet, l'invention propose un véhicule amphibie comprenant :
- une coque possédant un axe longitudinal,
- des moyens de propulsion aquatique,
- des moyens de propulsion terrestre montés sur des bras pivotant autour d'un axe sensiblement parallèle à l'axe longitudinal de ladite coque, pouvant prendre une position déployée dans laquelle ledit véhicule peut se déplacer sur terre grâce auxdits moyens de propulsion terrestre et une position repliée utilisée lorsque ledit véhicule se déplace sur l'eau grâce auxdits moyens de propulsion aquatique.

Selon l'invention, en position repliée, les bras s'engagent en pivotant dans des cavités ménagées dans la coque et une partie des bras forme un opercule qui ferme la cavité dans le prolongement de la carène.

Les bras qui portent les moyens de propulsion terrestres ont donc une double fonction :
- une fonction mécanique de liaison entre le véhicule amphibie et ses moyens de propulsion terrestre,
- une fonction nautique grâce à l'opercule qu'ils comportent ; en position repliée, l'opercule assure une continuité de la carène, oeuvres vives et oeuvres mortes, qui conserve ainsi ses qualités nautiques.

Dans un mode de réalisation, le véhicule amphibie comporte deux bras pivotants disposés symétriquement par rapport à un plan de symétrie longitudinal dudit véhicule, mais il peut également comporter deux paires de bras disposés de la même façon.

Avantageusement, en position repliée, lesdits moyens de propulsion terrestre s'engagent au moins partiellement dans lesdites cavités et se trouvent en totalité au-dessus de la ligne de flottaison. On minime ainsi la traînée qui survient quand le véhicule est soumis à une déferlante ou à une vague d'étrave.

Les moyens de propulsion terrestre peuvent être par exemple des chenilles ou des roues montées en extrémité de chaque bras.

Avantageusement, en position repliée, les moyens de propulsion terrestre peuvent constituer des pare battages latéraux pour le véhicule amphibie. En effet, si elles ne s'engagent pas complètement dans les cavités en position repliée, les chenilles ou les roues comportent une partie qui déborde de la coque et, compte tenu de leur nature résiliente (caoutchouc...), peuvent remplir la fonction de pare battage latéral pour le véhicule amphibie.

Les moyens de propulsion aquatiques, par exemple un Z drive et une hélice ou un hydrojet, peuvent comporter un moteur, par exemple un moteur à explosion.
De leur côté, les moyens de propulsion terrestre peuvent comporter une pompe hydraulique entraînée par ledit moteur.
Ces moyens hydrauliques peuvent comporter au moins deux moteurs hydrauliques indépendants, actionnant par exemple chacun une chenille ou un train de roues.

En variante, les parois de fond et les parois supérieures desdites cavités sont solidaires et peuvent être également montées pivotantes autour d'un axe parallèle à l'axe de pivotement des bras de façon à pouvoir prendre une position repliée dans laquelle les parois de fond et supérieure ferment les cavités et, lorsque ledit véhicule amphibie repose sur ses moyens de propulsion terrestre, une position déployée dans laquelle le pont du véhicule est latéralement dégagé.

Des modes d'exécution de l'invention seront décrits ci-après, à titre d'exemples non limitatifs, avec référence aux dessins annexés dans lesquels :
Les figures 1A et 1B sont des vues schématiques en coupe transversale d'un mode de réalisation du véhicule amphibie selon l'invention, les moyens de propulsion terrestre étant respectivement déployés et repliés,
La figure 1C est une vue schématique partielle en perspective du même mode de réalisation du véhicule amphibie, les moyens de propulsion terrestre étant repliés,
Les figures 2A, 2B et 2C sont des vues schématiques partielles en perspective d'un autre mode de réalisation du véhicule amphibie selon l'invention, les moyens de propulsion terrestre étant repliés (figure 2A) et déployés (figures 2B et 2C),
Les figures 3A, 3B et 3C sont des vues schématiques partielles en perspective d'un autre mode de réalisation du véhicule amphibie selon l'invention, les moyens de propulsion terrestre étant repliés (figure 3A) et déployés (figures 3B et 3C).

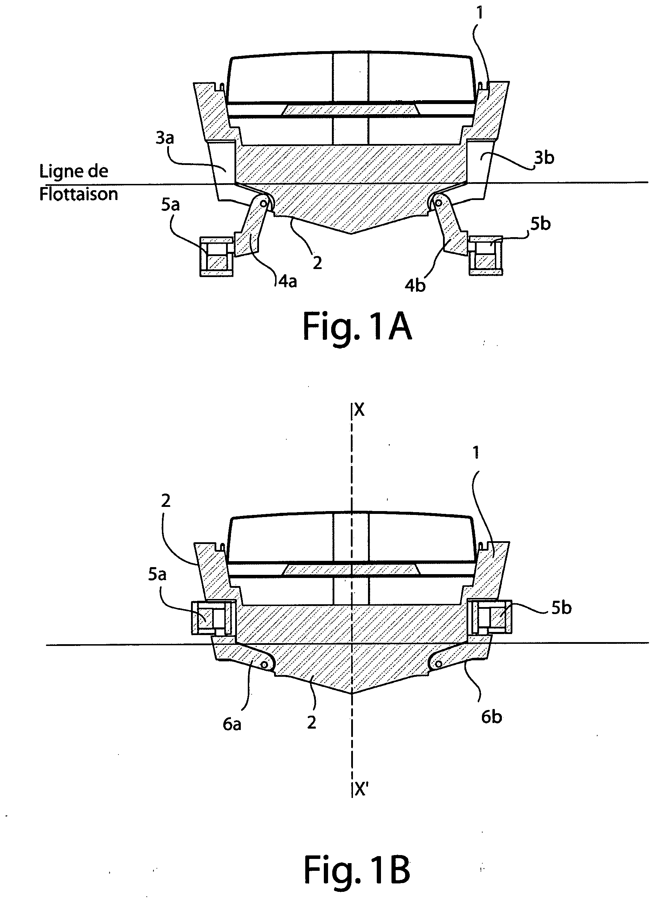

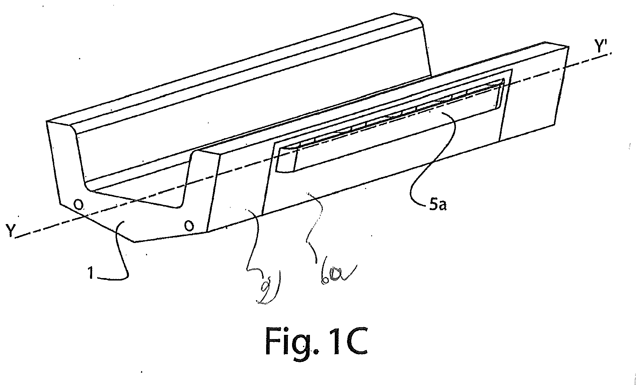

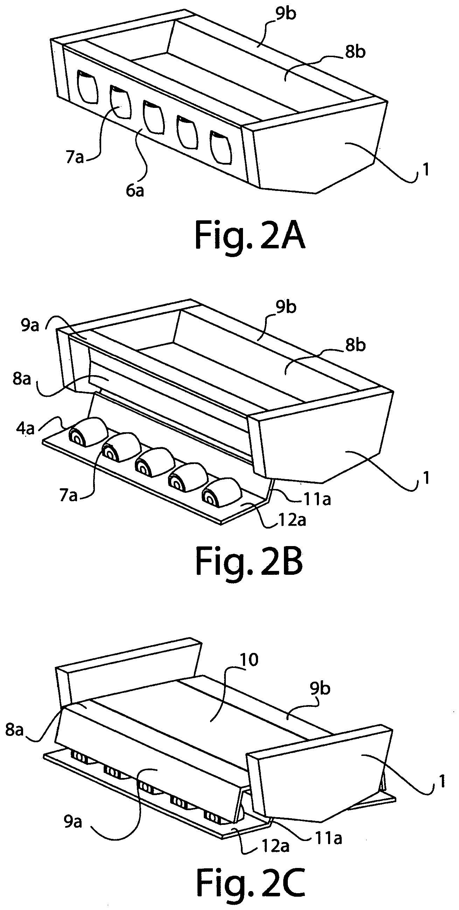

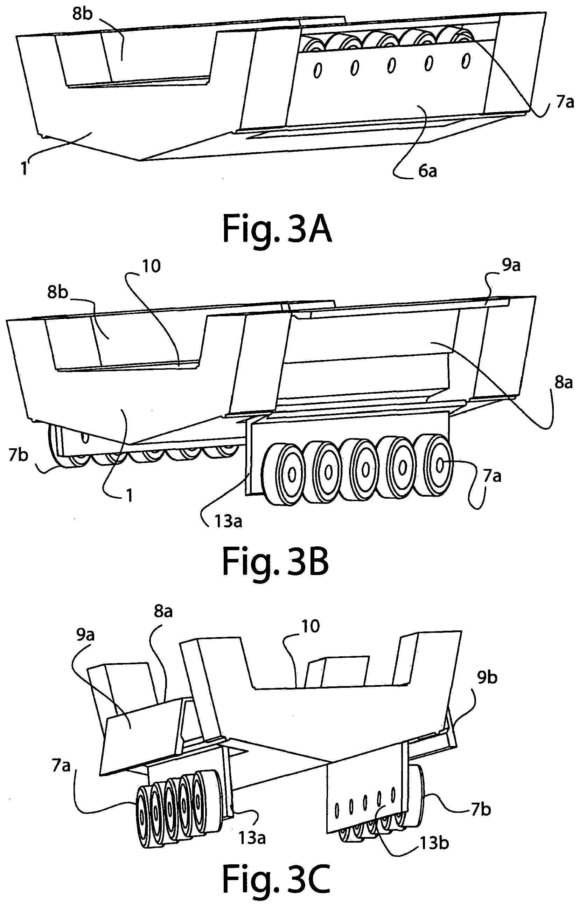

Comme illustré par les figures 1A à 1C, le véhicule amphibie comporte une coque 1 délimitant une carène 2 et des cavités 3a et 3b, comprenant chacune des cloisons latérales, une cloison supérieure 9a et 9b ainsi que des cloisons de fond 8a et 8b, qui sont ménagées dans les flancs de la coque 1. Deux bras 4a et 4b, situés de part et d'autre du plan de symétrie X-X' de la coque 1, peuvent pivoter autour d'un axe sensiblement parallèle à un axe Y-Y' de la coque 1 et situé dans la partie inférieure des bras, pour prendre une position déployée et une position repliée.
En position repliée, les bras 4a et 4b trouvent place respectivement dans les cavités 3a et 3b. Sur une de leurs faces, ils comportent des opercules, respectivement 6a et 6b, qui ferment au moins partiellement la cavité respective et se placent dans le prolongement de la carène 2. Les bras 4a et 4b sont porteurs à leur extrémité libre de chenilles 5a et 5b. En position repliée, ces chenilles 5a et 5b trouvent au moins partiellement place dans les cavités 3a et 3b. Dans cette position, les opercules 6a et 6b assurent la continuité de la partie de la carène 2 immergée et les chenilles 5a et 5b se trouvent entièrement au-dessus de la ligne de flottaison, de façon à ne pas sacrifier les propriétés nautiques du véhicule amphibie.
Lorsque les bras 4a et 4b sont en position déployée, le véhicule amphibie repose sur les chenilles 5a et 5b et peut se déplacer sur terre ; les cavités 3a et 3b sont alors ouvertes.
De façon alternative, les moyens de propulsion terrestre peuvent être constitués par un train de roues 7a et 7b disposé longitudinalement, comme illustré en figures 2A à 2C et 3A à 3C.
Les bras 4a et 4b peuvent être de forme allongée longitudinalement, notamment lorsqu'ils portent des chenilles ou des trains de roues.
Dans un mode de réalisation illustré en figure 2B, le bras 4a (respectivement 4b) peut être constitué de deux panneaux, par exemple plans, 11a et 12a (respectivement 11b et 12b), formant un angle obtus, le panneau 11a étant monté pivotant sur la coque 1, le panneau 12a portant les chenilles ou les roues. Dans ce mode de réalisation, l'axe de roulement des chenilles ou des roues se situe dans le prolongement du panneau 12a. L'opercule 6a est constitué par la face extérieure des panneaux 11a et 12a.
Dans un autre mode de réalisation illustré en figure 3B, le bras 4a (respectivement 4b) est constitué d'un seul panneau 13a (respectivement 13b), et l'axe de roulement des chenilles ou des roues est orthogonal audit panneau.

Dans un autre mode de réalisation (non représenté), le véhicule comporte deux paires de bras et deux paires de cavités latérales disposées de part et d'autre du plan de symétrie longitudinal du véhicule. Chaque bras peut alors être porteur d'une roue et comporter sur une de ses faces un opercule destiné à fermer la cavité respective dans laquelle il se replie.

En position repliée, les chenilles (5a, 5b) ou les roues (7a, 7b) ne pénètrent pas entièrement dans leur cavité respective (3a, 3b) et compte tenu de la nature résiliente du matériau qui les constitue (caoutchouc...), ils constituent avantageusement des pare battages latéraux pour le véhicule lorsqu'il se trouve à amarré quai.

Dans les variantes illustrées en figures 2C et 3C, la cloison de fond 8a (resp. 8b) et la cloison supérieure 9a (resp. 9b) de la cavité 3a (resp. 3b) sont solidaires et sont montées pivotantes autour d'un axe parallèle à l'axe de pivotement du bras 4a (resp. 4b) et situé dans la partie inférieure de la cloison de fond, à hauteur du pont 10, pour se déployer vers l'extérieur de la coque 1 du véhicule. En position repliée, les cloisons de fond 8a et 8b ferment leur cavité respective 3a et 3b et doivent donc réaliser une bonne étanchéité avec la coque 1, par exemple grâce à un joint d'étanchéité et un verrouillage en position repliée. Ces cloisons de fond 8a et 8b peuvent pivoter et prendre une position déployée lorsque les bras 4a et 4b ont déjà eux même pris une position déployée, le véhicule amphibie reposant alors sur ses moyens de propulsion terrestre. Dans cette position déployée à la fois des bras 4a et 4b et des cloisons de fond 8a et 8b, le pont 10 du véhicule peut être entièrement dégagé latéralement, ce qui permet un chargement et un chargement facilités qui peut être utile pour une application transport de charge. De plus, dans cette position, les cloisons de fond 8a et 8b protègent les moyens de propulsion terrestre, quels qu'ils soient, et jouent la fonction de garde boues.

## Revendications

1. Véhicule amphibie comprenant :
• une coque (1) possédant un axe longitudinal (Y-Y'),
• des moyens de propulsion aquatique,
• des moyens de propulsion terrestre (5a, 5b, 7a, 7b) montés sur des bras (4a, 4b) pivotant autour d'un axe sensiblement parallèle à l'axe longitudinal (Y-Y') de ladite coque, pouvant prendre une position repliée utilisée lorsque ledit véhicule se déplace sur l'eau grâce auxdits moyens de propulsion aquatique et une position déployée dans laquelle ledit véhicule peut se déplacer sur terre grâce auxdits moyens de propulsion terrestre,
**caractérisé en ce que**, en position repliée, lesdits bras (4a, 4b) s'engagent dans des cavités (3a, 3b) ménagées dans ladite coque (1) et **en ce qu'**une partie desdits bras (4a, 4b) forme un opercule (6a, 6b) qui ferme au moins partiellement ladite cavité (3a, 3b) dans le prolongement de la carène (2).

2. Véhicule amphibie selon la revendication 1,
**caractérisé en ce qu'**il comporte deux bras pivotants (4a, 4b) disposés symétriquement par rapport à un plan de symétrie longitudinal (X-X') dudit véhicule.

3. Véhicule amphibie selon la revendication 1,
**caractérisé en ce qu'**il comporte deux paires de bras pivotants disposées symétriquement par rapport à un plan de symétrie longitudinal (X-X') dudit véhicule.

4. Véhicule amphibie selon l'une des revendications 1 à 3,
**caractérisé en ce que**, en position repliée, lesdits moyens de propulsion terrestre (5a, 5b, 7a, 7b) s'engagent au moins partiellement dans lesdites cavités (3a, 3b) et se trouvent en totalité au-dessus de la ligne de flottaison.

5. Véhicule amphibie selon l'une des revendications 1 à 4,
**caractérisé en ce que** lesdits moyens de propulsion terrestre sont des chenilles (5a, 5b).

6. Véhicule amphibie selon l'une des revendications 1 à 4,
**caractérisé en ce que** lesdits moyens de propulsion terrestre sont des roues (7a, 7b).

7. Véhicule amphibie selon la revendication 5 ou 6,
**caractérisé en ce que**, en position repliée, lesdits moyens de propulsion terrestre (5a, 5b, 7a, 7b) constituent des pare battages latéraux pour le véhicule amphibie.

8. Véhicule amphibie selon l'une quelconque des revendications précédentes,
**caractérisé en ce que** lesdits moyens de propulsion aquatiques comportent un moteur.

9. Véhicule amphibie selon la revendication 8,
**caractérisé en ce que** lesdits moyens de propulsion terrestre (5a, 5b, 7a, 7b) sont mus par des moyens hydrauliques comportant une pompe hydraulique entraînée par ledit moteur.

10. Véhicule amphibie selon la revendication 9,
**caractérisé en ce que** lesdits moyens hydrauliques comportent au moins deux moteurs hydrauliques indépendants.

11. Véhicule amphibie selon l'une quelconque des revendications précédentes,
**caractérisé en ce que** les parois de fond (8a, 8b) et les parois supérieures (9a, 9b) desdites cavités (3a, 3b) sont solidaires et montées pivotantes autour d'un axe parallèle à l'axe de pivotement desdits bras (4a, 4b) de façon à pouvoir prendre une position repliée dans laquelle lesdites parois de fond et supérieure ferment lesdites cavités (3a, 3b) et, lorsque ledit véhicule amphibie repose sur ses moyens de propulsion terrestre, une position déployée dans laquelle le pont du véhicule (10) est latéralement dégagé.

## Patentansprüche

1. Amphibienfahrzeug, umfassend:
• einen Rumpf (1) mit einer Längsachse (Y-Y'),
• Antriebsmittel für den Wasserbetrieb,
• Antriebsmittel für den Landbetrieb (5a, 5b, 7a, 7b), die an Auslegern (4a, 5b) montiert sind, die um eine zur Längsachse (Y-Y') des Rumpfes im Wesentlichen parallele Achse schwenkbar sind, wobei die Ausleger eine eingeklappte Position einnehmen können, wenn sich das Fahrzeug durch die Antriebsmittel für den Wasserantrieb auf dem Wasser bewegt, und eine ausgeklappte Position, wenn sich das Fahrzeug durch die Antriebsmittel für den Landbetrieb auf dem Land bewegt,
**dadurch gekennzeichnet, dass** sich die Ausleger (4a, 4b) in der eingeklappten Position in Hohlräume (3a, 3b) einfügen, die in dem Rumpf (1) gebildet sind, und dass ein Teil der Ausleger (4a, 4b) eine Klappe (6a, 6b) bildet, die den Hohlraum (3a, 3b) in der Verlängerung des Kiels (2) zumindest teilweise verschließt.

2. Amphibienfahrzeug nach Anspruch 1,
**dadurch gekennzeichnet, dass** dieses zwei schwenkbare Ausleger (4a, 4b) aufweist, die zu einer Längssymmetrieebene (X-X') des Fahrzeugs symmetrisch sind.

3. Amphibienfahrzeug nach Anspruch 1,
**dadurch gekennzeichnet, dass** dieses zwei Paare von schwenkbaren Auslegern aufweist, die zu einer Längssymmetrieachse (X-X') des Fahrzeugs symmetrisch sind.

4. Amphibienfahrzeug nach einem der Ansprüche 1 bis 3,
**dadurch gekennzeichnet, dass** sich die Antriebsmittel für den Landbetrieb (5a, 5b, 7a, 7b) zumindest teilweise in die Hohlräume (3a, 3b) einfügen und sich insgesamt unterhalb der Wasserlinie befinden.

5. Amphibienfahrzeug nach einem der Ansprüche 1 bis 4,
**dadurch gekennzeichnet, dass** die Antriebsmittel für den Landbetrieb Raupen (5a, 5b) sind.

6. Amphibienfahrzeug nach einem der Ansprüche 1 bis 4,
**dadurch gekennzeichnet, dass** die Antriebsmittel für den Landbetrieb Räder (7a, 7b) sind.

7. Amphibienfahrzeug nach Anspruch 5 oder 6,
**dadurch gekennzeichnet, dass** die Antriebsmittel für den Landbetrieb (5a, 5b, 7a, 7b) Seitenfender für das Amphibienfahrzeug bilden.

8. Amphibienfahrzeug nach einem der vorhergehenden Ansprüche,
**dadurch gekennzeichnet**, das die Antriebsmittel für den Wasserbetrieb einen Motor umfassen.

9. Amphibienfahrzeug nach Anspruch 8
**dadurch gekennzeichnet, dass** die Antriebsmittel für den Landbetrieb (5a, 5b, 7a, 7b) durch hydraulische Mittel angetrieben werden, die eine durch einen Motor angetriebene Hydraulikpumpe umfassen.

10. Amphibienfahrzeug nach Anspruch 9,
**dadurch gekennzeichnet, dass** die hydraulischen Mittel zumindest zwei unabhängige Hydraulikmotoren umfassen.

11. Amphibienfahrzeug nach einem der vorhergehenden Ansprüche,
**dadurch gekennzeichnet, dass** die unteren Wände (8a, 8b) und die oberen Wände (9a, 9b) der Hohlräume (3a, 3b) einstückig ausgebildet sind und um eine zur Schwenkachse der Ausleger (4a, 4b) parallele Achse schwenkbar montiert sind, so dass sie eine eingeklappte Position einnehmen können, in der die unteren und oberen Wände die Hohlräume (3a, 3b) verschließen, und eine ausgeklappte Position, in der die Brücke des Fahrzeugs (10) seitlich gelöst ist, wenn das Amphibienfahrzeug auf seinen Antriebsmitteln für den Landbetrieb aufliegt.

## Claims

1. An amphibious vehicle comprising:
• a hull (1) having a longitudinal axis (Y-Y')
• aquatic propulsion means,
• terrestrial propulsion means (5a, 5b, 7a, 7b) mounted on arms (4a, 4b) pivoting about an axis substantially parallel to the longitudinal axis (Y-Y') of said hull, which may assume a folded-back position used when said vehicle moves on water thanks to said aquatic propulsion means and a deployed position in which said vehicle may move on land thanks to said terrestrial propulsion means,
**characterized in that**, in the folded-back position, said arms (4a, 4b) engage into cavities (3a, 3b) made in said hull (1) and **in that** a portion of said arms (4a, 4b) forms a cover (6a, 6b) which at least partly closes said cavity (3a, 3b) in the extension of the hull bottom (2).

2. The amphibious vehicle according to claim 1,
**characterized in that** it includes two pivoting arms (4a, 4b) positioned symmetrically relatively to a longitudinal plane of symmetry (X-X') of said vehicle.

3. The amphibious vehicle according to claim 1,
**characterized in that** it includes pairs of pivoting arms positioned symmetrically relatively to a longitudinal plane of symmetry (X-X') of said vehicle.

4. The amphibious vehicle according to any of claims 1 to 3,
**characterized in that**, in the folded-back position, said terrestrial propulsion means (5a, 5b, 7a, 7b) at least partly engage into said cavities (3a, 3b) and are entirely above the waterline.

5. The amphibious vehicle according to any of claims 1 to 4,
**characterized in that** said terrestrial propulsion means are caterpillar tracks (5a, 5b).

6. The amphibious vehicle according to any of claims 1 to 4,
**characterized in that** said terrestrial propulsion means are wheels (7a, 7b).

7. The amphibious vehicle according to claim 5 or 6,
**characterized in that**, in the folded-back position, said terrestrial propulsion means (5a, 5b, 7a, 7b) form lateral fenders for the amphibious vehicle.

8. The amphibious vehicle according to any of the preceding claims,
**characterized in that** said aquatic propulsion means include a motor.

9. The amphibious vehicle according to claim 8,
**characterized in that** said terrestrial propulsion means (5a, 5b, 7a, 7b) are driven by hydraulic means including a hydraulic pump driven by said motor.

10. The amphibious vehicle according to claim 9,
**characterized in that** said hydraulic means include at least two independent hydraulic engines.

11. The amphibious vehicle according to any of the preceding claims,
**characterized in that** the back walls (8a, 8b) and the upper walls (9a, 9b) of said cavities (3a, 3b) are integral with each other and pivotally mounted about an axis parallel to the pivot axis of said arms (4a, 4b) so as to be able to assume a folded-back position in which back and upper walls close said cavities (3a, 3b) and, when said amphibious vehicle rests on its terrestrial propulsion means, a deployed position in which the deck of the vehicle (10) is clear laterally.
